# EUROPEAN PATENT SPECIFICATION

(11) **EP 3 631 192 B1**
(45) Date of publication and mention of the grant of the patent: **30.06.2021**
(21) Application number: 17919806.4
(22) Date of filing: 04.08.2017
(51) Int. Cl.: F03B 13/22, F03B 13/14, F03B 17/06, F03B 13/18, F03B 13/26

(54) **WAVE-POWER PLANT WITH CONTROLLABLY BUOYANT FLOATS**
WELLENENERGIEANLAGE MIT STEUERBAREN SCHWIMMERN
CENTRALE HOULOMOTRICE À FLOTTEURS FLOTTANTS POUVANT ÊTRE COMMANDÉS

(43) Date of publication of application: 08.04.2020
(73) Proprietor: Teknoplan AS, 3870 Fyresdal (NO)
(72) Inventor: AAMLID, Magne, 3870 Fyresdal (NO)
(74) Representative: Curo AS
(86) International application number: PCT/NO2017/050201
(87) International publication number: WO 2019/027327

(56) References cited:
- WO-A1-2007/015269
- ES-A1- 2 299 361
- GB-A- 2 512 627
- JP-A- S57 206 779
- US-A- 1 026 450
- US-A1- 2007 284 882
- US-A1- 2012 211 988
- US-A1- 2017 159 636

## Description

The present invention concerns a subsea wave power plant.

### Background

The invention is related to a device for the production of electrical energy from water in motion, such as sea currents, wave motion or running water. A challenge of surface-based wave power plants out in the ocean is strain during extreme weather, and it has been shown to be difficult and techically challenging to produce a surface structure that can withstand such strain.

In order to overcome such challenges, fully or partially submergible power plants have been suggested. An example from the prior art of submergible wave power plants is GB 2 459 843 A. This publication describes a number of water turbines mounted on a flexible shaft. The lower end of the shaft is connected with a generator mounted flexible to the seabed. The upper end is provided with a buoyancy means. In this way the structure can follow direction and degree of water flow.

US 5,946,909 describes numerous floating turbine rotors mounted on a flexible shaft. One end of the shaft is supported on the seabed, whereas the other end is connected with an electrical generator ashore.

US 2007/0284882 A1 discloses a flowing water turbine system comprising a mooring, a flotation device couplet to the mooring, a plurality of blades arranged to rotate about an axle and coupled to an electrical generator for the production of electrical current under the incluence of a water current.

### Object

The object of the invention is to provide a submergible wave power plant where the turbines in a simple manner can be positioned in the bulk of water, in order to obtain an optimum utilization of the flow energy. Another object of the invention is to be able to submerge the wave power plant to a larger depth in the sea in case of extreme weather or to avoid impact or collision with surface vessels.

### The invention

This object is achieved by a wave power plant according to claim 1. Additional beneficial features appear from the dependent claims.

### General description

The invention is related to a wave power plant for the production of electrical energy, and comprises a generator housing having a generator for the production of electrical energy. An elongate shaft is connected to the generator, wherein one or more rotor blades are mounted unidirectional rotary to the shaft. Moreover, the shaft exhibits buoyancy means, and an anchoring to seabed or river bed. The elongate shaft in accordance with the invention is hollow and accomodates at least one conduit for transport of pressurized gas, and at least one signal cable, wherein the wave power plant exhibits at least two buoyancy means. Each buoyancy means comprises a housing having a hollow interior and an aperture for exchange of water between surrounding mass of water and the cavity inside the housing. The buoyancy means is arranged fixedly connected to, and encircling, the shaft, wherein an inflatable and compressible bladder is arranged around the shaft and connected in a water tight manner to the interior of the housing, this defining a gas-filled interior of the bladder and a water-filled compartment in the housing, outside the bladder. A valve, controllable by a signal cable, is arranged within the hollow shaft, arranged to exchange gas between the gas-filled interior and the generator housing via a conduit. Moreover, the power plant exhibits means for mutually independently pressurizing or pressure balancing the bladder inside respective buoyancy means. In this way the angle of inclination of the shaft and the depth level of the wave power plant can be controlled precisly with respect to optimal power production, shielding against extreme weather and risk of impact from proximate vessels.

Moreover, the shaft and/or buoyancy means can be provided with sensors selected from the group consisting of pressure, echo recorder, angle position in the horizontal plane, strain, and power production.

The means for pressurizing or pressure balancing the bladder can be realized in the form of at least one compressor and a pressure tank for gas, in flow communication with a conduit.

The wave power plant do preferably exhibit a conctroller in signal communication with valve, compressor and said sensors. The compressor, pressure tank and controller are preferably accomodated inside the generator housing.

A floatable buoy is connected to the generator housing by a cable. Moreover, the buoy can exhibit sensors for registration of physical parameters at the water surface, and sending the parameters to the controller. Moreover, the buoy can exhibit means for sending light and/or sound signals at the water surface.

The produced electricity is transported in cables down along the mooring to a 360 degrees swivel integrated in the anchor pile, and further to consumption onshore or at oil platforms, sea pens or other offshore installatitons.

In a second embodiment the rotor blade is supported eccentric to the shaft via a rotor blade attachment and a pivot bearing, wherein the pivot bearing exhibits stop means, so that the rotor blade can be rotated about an axis extending radially on the elongate axis of the shaft, between a first position where the rotor blade surface extends substantially vertically and perpendicularly to the water surface, and a second position where the rotor blade surface extends substantially horizontally and level with the water surface.

### Detailed description

In the following, the present invention is described in further details by means of drawings, where
Fig. 1 is a schematic drawing of a wave power plant floating in a mass of water,
Fig. 2a is a principal drawing of a prior art wave power plant having non-compensated buoyancy, floating in water having little currents or little wind,
Fig. 2b is a drawing corresponding to Fig. 2a, where the wave power plant is floating horizontally in an optimal position for the production of eletricity,
Fig. 2c is a drawing corresponding to Figs. 2a and 2b, but where the wave power plant with non-compensated buoyuancy is floating in water with strong current and/or in strong wind,
Fig. 3 is a schematic cross-section through the buoyancy means,
Fig. 4 is a schematic cross-section through the generator housing and accompanying components,
Fig. 5 shows a generator shaft viewed from above with a second embodiment of a rotor blade, and
Figs. 6a and 6b show a third embodiment of a rotor blade.

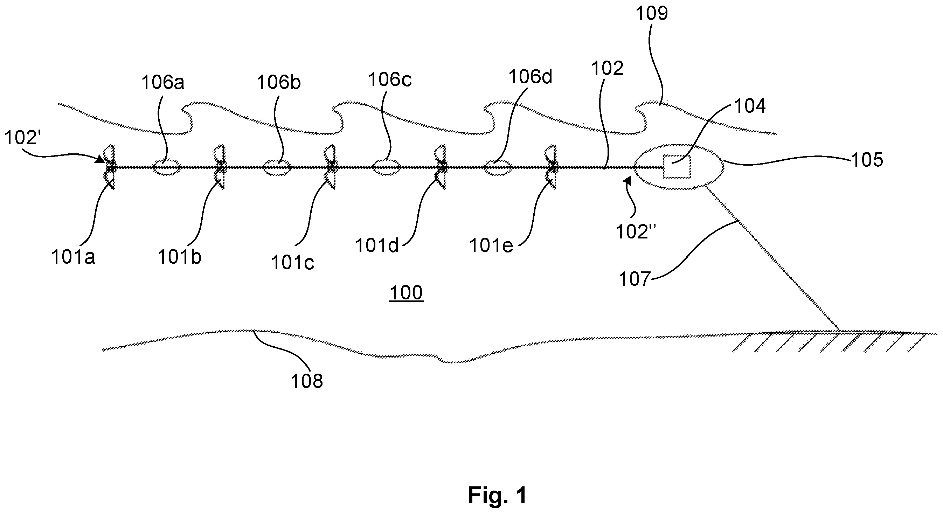

Figure 1 illustrates the wave power plant in accordance with the invention, denoted generally by reference numeral 100. Five rotor blades 101a, 101b, 101c, 101d, 101e are mounted on a common elongate shaft 102, arranged to rotate about its axis, in one direction only. A first end 102' of the axle is floating freely in the water, whereas an opposite second end 102" is connected with an electricity generator 104 addomodated in a housing 105 anchored movable to the seabed 108 via an anchor pile/wire 107 which allows free movement of the wave power plant 100 in the horizontal plane under the water surface 109. A number of buoyancy means 106a, 106b, 106c, 106d are attached to the shaft 102 and exhibit a hollow interior (not shown) with one or more valves for water, to exchange water accomodated inside the buoyuance means and the mass of water in the sea. Moreover, the respective buoyancy means is provided with an air pressure pipe which provides the buoyancy means with compressed air from a compressed air source in the generator housing, thus controlling the density and hence buoyancy of the buoyancy means in the mass of water by means of a controller (not shown) in the generator housing. It should be added that the invention is not limited to pressurized air, and that it can be operated by another pressurized gas.

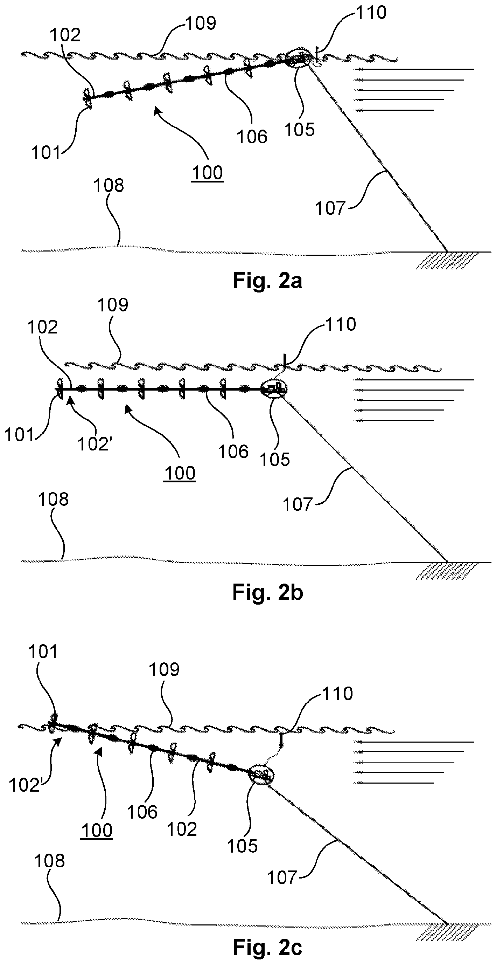

Figs. 2a-c illustrate a floating wave power plant from the prior art, wherein the buoyancy means do not have controllable buoyancy. I figure 2a the wave power plant 100 floats in a mass of water having little current and/or little waves. Here it can be seen that the shaft 102 is inclined, with the generator housing 105 floating in the surface, and the free shaft end 102' is located further down in the mass of water. Water current, indicated by the arrows at the right hand side in the drawing, hits the rotor blades 101 at an angle which is not optimal with respect to production of electricity.

In fig. 2b the wave power plant is floating with its shaft 102 extending horizontally in the mass of water, in that the buoyancy balances the force from water current and/or waves. The water current do here hit the rotor blades 101 perpendicularly, and represents asn optimal position for production of electric current.

In figure 2c the wave power plant is subjected to strong forces from water current and/or waves. The generator housing 105 is pulled down into the water, whereas the free shaft end 102' is located in the water surface with the outermost rotor blade 101 splashing in the water surface 109.

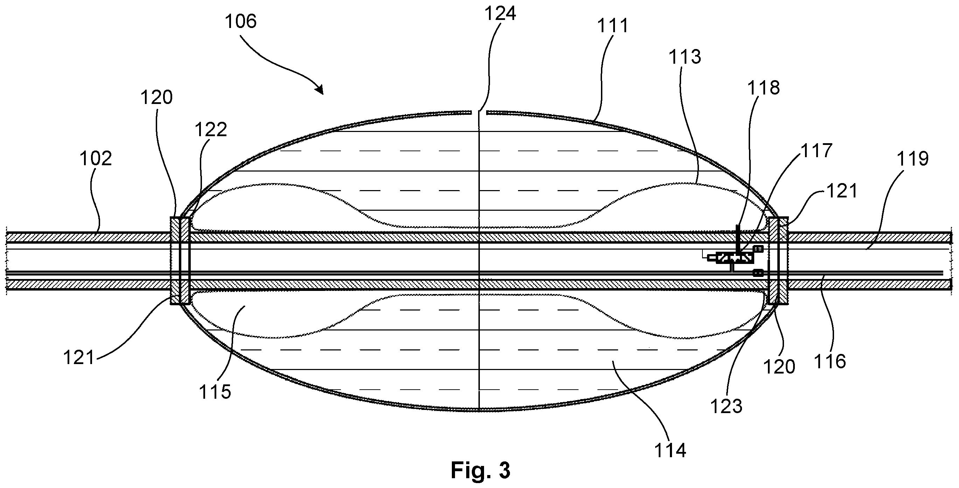

Figure 3 shows a cross-section through a buoyancy means 106 at the wave power plant in accordance with the invention. The buoyancy mens 106 comprises a housing 111 of a solid material, preferably with an elongate oval shape. The housing 111 can be formed of any, prefereably solid, material, but is preferably made of a polymer material with low density, thus providing minimal addition to the buoyancy. The buoyancy means 106 is mounted on the shaft 102 about flange couplings 120 at a first and second end of the buoyancy means 106 viewed in the longitudinal extension of the shaft 102. The flange couplings are provided with sealing means 121 to prevent water from flowing in and out of the housing 111 along the shaft 102. The buoyancy means 106 is hence arranged to co-rotate with the shaft 102

The housing 111 has a hollow interior and is provided with a bladder or bellows 133 enclosing the shaft 102 along all of its length extension inside the housing 111. The bladder 113 is at each end of the shaft 102 attached ot the internal wall of the housing 111 at a first end 122 and a second end 123 of the housing 111 along the shaft 102. The wall of the bladder 113 has a length extension which is larger than the length of the shaft 102 which it is encompassing do therefore form a sausage which can be expanded and contracted, as described in further details below. As indicated in figure 3, the bladder 113 is partially inflated and exhibits an air-or gas-filled cavity 115 with a surrounding volume of liquid indicated by 114. Moreover, the housing 111 is provided with an aperture 124 through which water can flow in and out.

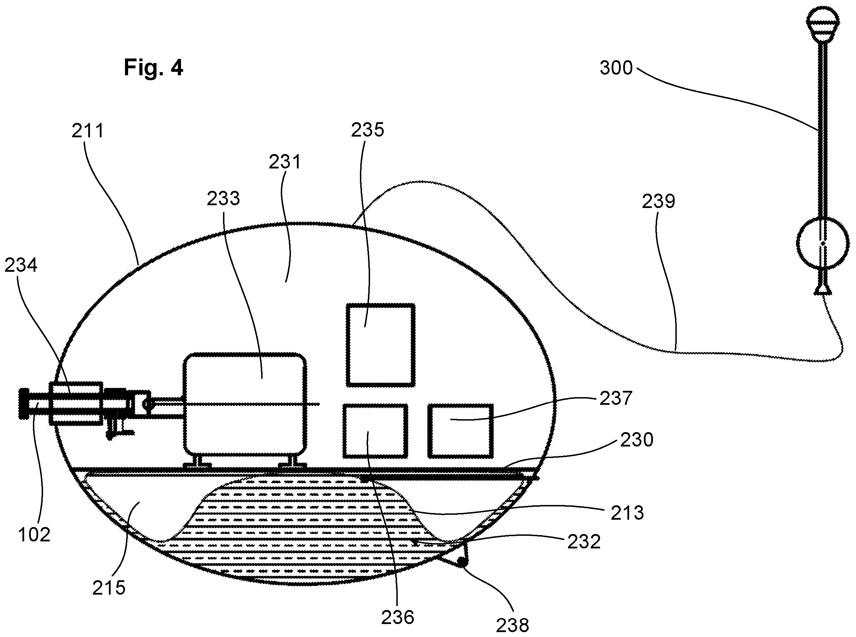

The interior of the blader 113 is in flow connection with an air compressor and a pressure tank in a generator housing (see Fig. 4) via a compressed air conduit 116 for pressurized air, which is arranged inside a hollow interior of the shaft 102. A compressed air valve 117 connects the compressed air conduit 116 and a compressed air conduit 118 which emerges into the interior of the bladder 113. The compressed air valve 117 is controlled by a controller in the generator housing over a signal cable 119 extending from the generator housing along the interior of the shaft 102 .

The shaft 102 and/or one or more of the buoyancy mans 106 can be provided with a sensor for angle position (not shown), which can record deviation of angle of inclination from horizontal level of the shaft 102, and send signal to a controller (see the description of Fig. 4 below) over signal cable 119.

Now referring to Fig. 4, a schematic illustration of a generator housing 211 has been made. The generator housing 211 is a closed container having a hollow interior which accomodates numerous components of the wave power plant and is anchored to the seabed of the mass of water over a mooring chain or similar (not illustrated), connected to a bracket 238 at the generator housing 211. A separator plate 230 divides the cavity of the generator housing 211 in a first compartment 231 and a second compartment 232. A bladder 213 is accomodated in the second compartment 232 to control the buoyancy of the generator housing 211 in a manner similar to the buoyancy means 106. Construction and mode of operation is in all essentials the same as for the buoyancy means 106 and has therefore been omitted here.

A power generator 233 is arranged in the first compartment 231, connected with the shaft 102 over a swivel connection 234. The swivel connection 234 is also arranged to accommodate the compressed air conduit 116 and the signal cable 119. Then, the shaft 102 with its buoyancy means 106, compressed air conduit 116 and signal cable 119 can rotate freely about the shaft by rotary power generated by the rotor blades 101, and still exchange compressed air and control signals between the bouyancy means and components inside the generator housing 211.

An air compressor is indicated schematically by 235. The air compressor 235 is further connected with a compressed air tank indicated schematically by 236. The compressed air tank 236 is further connected with a compressed air conduit 116 via a valve (not shown), to provide the respective buoyancy means with compressed air when the (not illustrated) valve is open and the compressed air valve 117 in the respective buoyancy means 106 are open, thus increasing the buoyancy of the respective buoyancy means 106. The compressor 235, the compressed air (not illustrated) shut-off valve and the compressed air valves 117 in the respective buoyancy means 106 are controlled by a controller illustrated schematically by reference numeral 237. The controller 237 is arranged to control the pressure, mutually independenly, in the respective buoyancy means 106.

A buoy 300 is connected with the generator housing 211 over a signal or mooring cable 239. The buoy can be provided with means for sensing movements at the surface, such as vessels located in the vicinity at a risk of colliding with the wave power plant, and send signals down to the controller 237 to initiate reduction of buoyancy and submerge the wave power plant in the sea. The buoy can also be provided with means that sense the water current and wind, and send signals down to the controller 237, which can control the buoyancy of the wave power plant in the sea accordingly. Moreover, the buoy 300 can be provided with means for sending signals in the form of light and/or sound to vessels in the vicinity at a risk of colliding with the wave power plant.

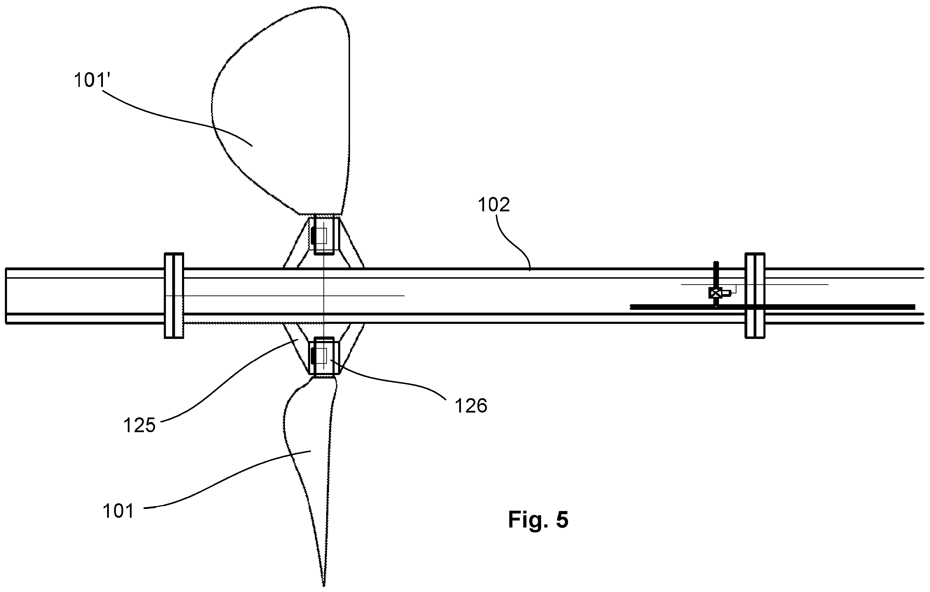

Figure 5 shows a second embodiment of a rotor blade in accordance with the invention. The drawing shows a section of a generator shaft 102 provided with a rotor blade attachment 125. An eccentrically supported rotor blade 101 is attached pivotal about a pivot bearing 126, radially pivotal with respect to the longitudinal axis of the shaft. A stop means (not shown) is provided in the pivot bearing 126 of the rotor blade attachment 125, so that the rotor blade is stopped at a plane extending substantially horizontally with the shaft 102 (and the water surface). The eccentric rotor blade 101 supported in a pivotal manner, and the stop means in the pivot bearing 126 of the rotor blade attachment 125 make sure that the rotor blade pivots outward and stops at a position where the plane of the rotor blade extends substantially in parallell with the longitudinal extension of the shaft 102 when the shaft moves vertically from wave influence. This is illustrated at reference numeral 101' in Fig. 5. Accordingly, this second embodiment of the rotor blade can produce energy also from vertical movement of the substantially horizontally extending shaft 102. The second embodiment of the rotor blades can be used alone on a generator shaft, or can be combined with the first embodiment described in connection with Figs. 1-4.

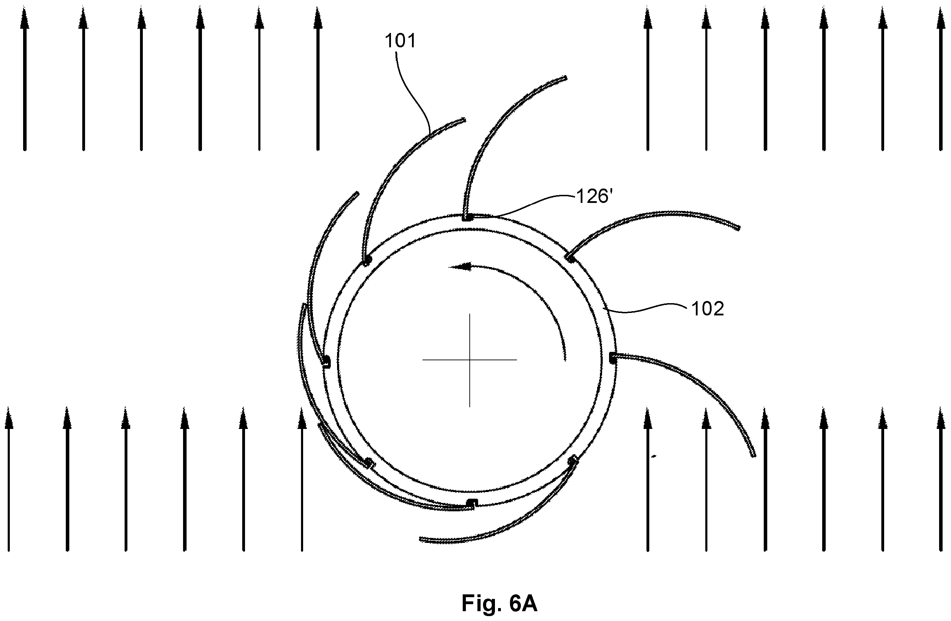

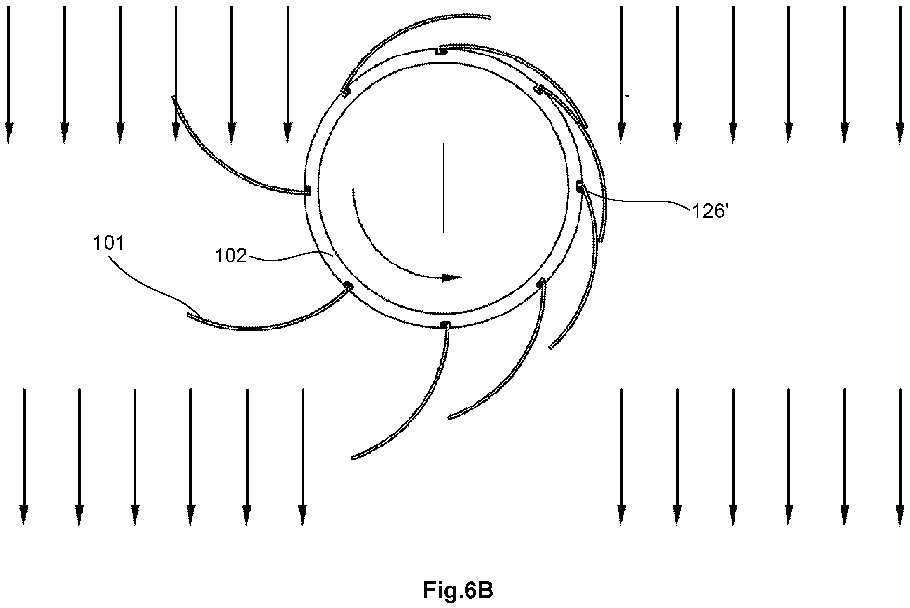

Figs. 6A and 6B illustrate a third embodiment of a rotor blade 101 mounted onshaft a shaft 102. The drawings show a cross-section through a substantially horizontally extending shaft 102. Here, a number of rotor blades 102 are arranged bendable in the peripheral direction of the shaft 102. The bending function can be solved either in that the rotor blades 101 are made of a flexible material, such as soft plastic, or with rigid/stiff rotor blades 101 connected pivotal to a pivot bearing 126'. Figure 6A shows a situation with an upward flowing water current upstream of a wave, where the flow direction is indicated by arrows. Here the water current will put the shaft 102 in rotation from vertical water current. Figure 6B shows the opposite situation with an downward flowing water current downstream of a current. The third embodiment of a rotor blade can be used alone on an shaft, or can be combined with the first and/or the second embodiment of the rotor blade described above.

### Mode of operation

### Increase buoyancy

As stated above, the compressor 235 provides compressed air to compressed air tank 236 provided with a shut-off valve (not shown) connected with controller 237 to store compressed air. In order to increase buoyancy in a particular buoyancy means 106, the compressed air valve 117 is opened via a control signal from controller 237 via signal cable 119, and the compressed air tank 236 shut-off valve (not shown) stays open for a period of time until desired amount of air has been supplied to the cavity 115 of the housing 111, whereupon both valves close. At the same time, water 114 is pressed out through aperture 124 in the housing 111.

### Decrease buoyancy

When the buoyancy is to be reduced, the compressed air tank 236 shut-off valve (not shown) of the is kept closed, wherein compressed air valve 117 is opened and air flow back to the low pressure side of compressor 235 through compressed air conduit 116, whereas water flow into the cavity 114 of the housing 111 through aperture 124 for a period of time sufficient to achieve desired degree of buoyancy, whereupon compressed air valve 117 closes.

### Control

Moreover, the controller 237 is provided with sofware and inputs to receive signals from different parts of the wave power plant, such as depth position, angle of inclination of shaft 102, power production, water current, buoyancy in respective buoyancy means 106, wind direction and wind speed at the surface, from buoy 300, radar signals about adjacent vessels etc. The controller composition and control of individual buoyancy of the respective buoyancy means 106, angle of inclination of shaft 102, compressor operation and extraction of information from buoyancy means 300 and emittance of signal from same etc by controller 237 is not described in further detail here and is considered to be within the reach of a person skilled in the art with support from the present specification.

## Claims

1. Wave power plant (100) for the production of electric energy, comprising a generator housing (211) having a generator (233) for the production of electric energy, an elongate shaft (102) connected to the generator (233), wherein one or more rotor blades (101) are mounted unidirectional rotary on the shaft (102), wherein the shaft (102) further comprises buoyancy means (106), and an anchoring to seabed or river bed, wherein the elongate shaft (102) is hollow and accommodates at least one conduit (116) for transport of pressurized gas, and at least one signal cable (119), wherein the wave power plant (100) exhibits at least two buoyancy means (106) comprising a housing (111), having a hollow interior and an aperture (124) for exchange of water between surrounding mass of water and the cavity in the housing (111), arranged fixedly connected to and encompassing the shaft (102), wherein an inflatable and deflatable bladder (113) is arranged around the shaft (102) and is connected in a water tight manner to the interior of the housing (111), thus defining a gas-filled interior (115) of the bladder (113) and a water-filled compartment (114) inside the housing (111) outside the bladder (113), wherein a valve (117) controllable via a signal cable (119) is arranged inside the hollow shaft (102), arranged to exchange gas between the gas-filled interior (115) and the generator housing (211) via conduit (116), and wherein the wave power plant (100) exhibits means for pressurizing or pressure balancing the bladder (113) in a mutual independent manner inside respective buoyancy means (106), wherein a floatable buoy (300) is connected with the generator housing (211) via a cable (239), and wherein the elongate shaft (102) is arranged to rotate.

2. The wave power plant of claim 1, wherein the shaft (102) and/or the buoyancy means (106) are provided with sensors selected from the group consisting of of pressure, echo recorder, angle position in the horizontal plane, strain, and power production.

3. The wave power plant of claim 1 or 2, wherein the means for pressurizing or pressure balancing the bladder (113) comprises at least one compressor (235) and a pressure tank (236) for gas in flow communication with conduit (116).

4. The wave power plant of claim 3, wherein the wave power plant (100) exhibits a controller (237) in signal communication with valve (117), compressor (235) and said sensors.

5. The wave power plant of claim 3, wherein the compressor (235), the pressure tank (236) and the controller (237) are accommodated inside the generator housing (211).

6. The wave power plant of any one of the claims 4 and 5, wherein the buoy (300) exhibits sensors for recording physical parameters at the water surface, and sending the parameters to controller (237).

7. The wave power plant of any one of the claims 4 to 6, wherein the buoy (300) exhibits means for sending light and/or sound signals at the surface.

8. The wave power plant of any one of the preceding claims, wherein the rotor blade (101) is supported eccentric to the shaft (102) via a rotor blade attachment (125) and a pivot bearing (126), wherein the pivot bearing exhibits stop means, so that the rotor blade (101) can pivot about an axis extending radially to the longitudinal axis of the shaft (102), between a first position where the rotor blade (101) surface extends substantially vertically and perpendicularly to the water surface, and a second position where the rotor blade (101) surface extends substantially horizontally and level with the water surface.

9. The wave power plant of any one of the claims 1 to 7, wherein a number of rotor blades (101) are arranged bendable in the periphery of the shaft (102).

10. The wave power plant of claim 9, wherein the rotor blades (101) are formed of an elastic material.

11. The wave power plant of claim 9, wherein the rotor blades (101) are formed of a stiff material and rotary in the periphery of the shaft (102) about a pivot bearing (126').

## Patentansprüche

1. Wellenkraftwerk (100) für die Erzeugung elektrischer Energie, umfassend ein Generatorgehäuse (211), das einen Generator (233) für die Erzeugung elektrischer Energie aufweist, eine längliche Welle (102), die mit dem Generator (233) verbunden ist, wobei eine oder mehrere Laufschaufeln (101) unidirektional drehbar auf der Welle (102) montiert sind, wobei die Welle (102) ferner Auftriebsmittel (106), die angeordnet sind, um fest mit der Welle (102) verbunden zu sein und diese zu umringen, und eine Verankerung an einem Meeresboden oder Flussbett umfasst, wobei die längliche Welle (102) hohl ist und wenigstens eine Leitung (116) zum Transport von Druckgas und wenigstens ein Signalkabel (119) unterbringt, wobei das Wellenkraftwerk (100) wenigstens zwei Auftriebsmittel (106) vorweist, die ein Gehäuse (111) umfassen, das ein hohles Inneres und eine Öffnung (124) zum Austausch von Wasser zwischen einer umgebenden Wassermasse und dem Hohlraum in dem Gehäuse (111) aufweist, wobei eine aufblasbare und abblasbare Blase (113) um die Welle (102) angeordnet ist und auf eine wasserdichte Weise mit dem Inneren des Gehäuses (111) verbunden ist, wobei somit ein gasgefülltes Inneres (115) der Blase (113) und ein wassergefülltes Fach (114) innerhalb des Gehäuses (111) außerhalb der Blase (113) definiert werden, wobei ein Ventil (117), das über ein Signalkabel (119) steuerbar ist, innerhalb der Hohlwelle (102) angeordnet ist, die angeordnet ist, um Gas zwischen dem gasgefüllten Inneren (115) und dem Generatorgehäuse (211) über die Leitung (116) auszutauschen; und wobei das Wellenkraftwerk (100) Mittel zum Druckbeaufschlagen oder zur Druckentlastung der Blase (113) auf eine gegenseitige unabhängige Weise innerhalb der jeweiligen Auftriebsmittel (106) vorweist, wobei eine schwimmfähige Boje (300) mit dem Generatorgehäuse (211) über ein Kabel (239) verbunden ist, und wobei die längliche Welle (102) angeordnet ist, um sich zu drehen.

2. Wellenkraftwerk nach Anspruch 1, wobei die Welle (102) und/oder die Auftriebsmittel (106) mit Sensoren versehen sind, die aus der Gruppe ausgewählt sind, die aus Druck, Echoschreiber, Winkelposition in der horizontalen Ebene, Beanspruchung und Stromerzeugung besteht.

3. Wellenkraftwerk nach Anspruch 1 oder 2, wobei die Mittel zum Druckbeaufschlagen oder zur Druckentlastung der Blase (113) wenigstens einen Kompressor (235) und einen Drucktank (236) für Gas in Strömungskommunikation mit der Leitung (116) umfassen.

4. Wellenkraftwerk nach Anspruch 3, wobei das Wellenkraftwerk (100) eine Steuerung (237) in Signalkommunikation mit dem Ventil (117), dem Kompressor (235) und den Sensoren

5. Wellenkraftwerk nach Anspruch 3, wobei der Kompressor (235), der Drucktank (236) und die Steuerung (237) innerhalb des Generatorgehäuses (211) untergebracht sind.

6. Wellenkraftwerk nach einem der Ansprüche 4 und 5, wobei die Boje (300) Sensoren zum Aufzeichnen physikalischer Parameter an der Wasseroberfläche und zum Senden der Parameter an die Steuerung (237) vorweist.

7. Wellenkraftwerk nach einem der Ansprüche 4 bis 6, wobei die Boje (300) Mittel zum Senden von Licht- und/oder Audiosignalen an der Oberfläche vorweist.

8. Wellenkraftwerk nach einem der vorhergehenden Ansprüche, wobei die Laufschaufel (101) über eine Laufschaufelbefestigung (125) und ein Schwenklager (126) außermittig zu der Welle (102) gelagert ist, wobei das Schwenklager ein Anschlagmittel vorweist, so dass sich die Laufschaufel (101) um eine Achse schwenken kann, die sich radial zu der Längsachse der Welle (102) erstreckt, zwischen einer ersten Position, an der sich die Oberfläche der Laufschaufel (101) im Wesentlichen vertikal und senkrecht zu der Wasseroberfläche erstreckt, und einer zweiten Position, in der sich die Oberfläche der Laufschaufel (101) im Wesentlichen horizontal und auf gleicher Höhe mit der Wasseroberfläche erstreckt.

9. Wellenkraftwerk nach einem der Ansprüche 1 bis 7, wobei eine Anzahl von Laufschaufeln (101) biegsam in dem Umfang der Welle (102) angeordnet ist.

10. Wellenkraftwerk nach Anspruch 9, wobei die Laufschaufeln (101) aus einem elastischen Material ausgebildet sind.

11. Wellenkraftwerk nach Anspruch 9, wobei die Laufschaufeln (101) aus einem steifen Material und drehbar in dem Umfang der Welle (102) um ein Schwenklager (126') ausgebildet sind.

## Revendications

1. Centrale houlomotrice (100) de production d'énergie électrique, comprenant un boîtier de générateur (211) ayant un générateur (233) destiné à la production d'énergie électrique, un arbre allongé (102) relié au générateur (233), une ou plusieurs ailettes de rotor (101) étant montées de manière rotative unidirectionnelle sur l'arbre (102), l'arbre (102) comprenant en outre des moyens de flottabilité (106), et un ancrage au lit marin ou au lit d'un cours d'eau, l'arbre allongé (102) étant creux et contenant au moins un conduit (116) destiné au transport de gaz sous pression, et au moins un câble de signal (119), la centrale houlomotrice (100) présentant au moins deux moyens de flottabilité (106) comprenant un boîtier (111), ayant un intérieur creux et une ouverture (124) permettant l'échange d'eau entre la masse d'eau environnante et la cavité dans le boîtier (111), disposés de manière à être reliés à demeure à l'arbre (102) et à l'englober, une poche gonflable et dégonflable (113) étant disposée autour de l'arbre (102) et étant reliée de manière étanche à l'intérieur du boîtier (111), définissant ainsi un intérieur rempli de gaz (115) de la poche (113) et un compartiment rempli d'eau (114) à l'intérieur du boîtier (111) à l'extérieur de la poche (113), une soupape (117) pouvant être commandée par le biais d'un câble de signal (119) étant disposée à l'intérieur de l'arbre creux (102), disposée pour échanger du gaz entre l'intérieur rempli de gaz (115) et le boîtier de générateur (211) par le biais d'un conduit (116), et la centrale houlomotrice (100) présentant des moyens de pressurisation et d'équilibrage de la pression de la poche (113) d'une manière mutuellement indépendante à l'intérieur des moyens de flottabilité respectifs (106), une bouée flottante (300) étant reliée au boîtier de générateur (211) par le biais d'un câble (239), et l'arbre allongé (102) étant disposé pour tourner.

2. Centrale houlomotrice selon la revendication 1, l'arbre (102) et/ou les moyens de flottabilité (106) étant pourvus de capteurs choisis dans le groupe constitué par les capteurs de pression, d'enregistrement d'écho, de position angulaire dans le plan horizontal, de déformation et de production d'électricité.

3. Centrale houlomotrice selon la revendication 1 ou 2, les moyens de pressurisation ou d'équilibrage de la pression de la poche (113) comprenant au moins un compresseur (235) et un réservoir à pression (236) pour le gaz en communication d'écoulement avec le conduit (116).

4. Centrale houlomotrice selon la revendication 3, la centrale houlomotrice (100) présentant un dispositif de commande (237) en communication de signal avec la soupape (117), le compresseur (235) et lesdits capteurs.

5. Centrale houlomotrice selon la revendication 3, le compresseur (235), le réservoir à pression (236) et le dispositif de commande (237) étant contenus à l'intérieur du boîtier de générateur (211).

6. Centrale houlomotrice selon l'une quelconque des revendications 4 et 5, la bouée (300) présentant des capteurs servant à enregistrer des paramètres physiques à la surface de l'eau et à envoyer les paramètres au dispositif de commande (237).

7. Centrale houlomotrice selon l'une quelconque des revendications 4 à 6, la bouée (300) présentant des moyens d'envoi de signaux lumineux et/ou sonores à la surface.

8. Centrale houlomotrice selon l'une quelconque des revendications précédentes, l'ailette de rotor (101) étant supportée de manière excentrique par rapport à l'arbre (102) par le biais d'une fixation d'ailette de rotor (125) et d'un palier de pivotement (126), le palier de pivotement présentant des moyens d'arrêt, de sorte que l'ailette de rotor (101) peut pivoter autour d'un axe s'étendant radialement à l'axe longitudinal de l'arbre (102), entre une première position où la surface d'ailette de rotor (101) s'étend sensiblement verticalement et perpendiculairement à la surface de l'eau, et une seconde position où la surface de l'ailette de rotor (101) s'étend sensiblement horizontalement et au niveau de la surface de l'eau.

9. Centrale houlomotrice selon l'une quelconque des revendications 1 à 7, un certain nombre d'ailettes de rotor (101) étant disposées de manière pliable à la périphérie de l'arbre (102).

10. Centrale houlomotrice selon la revendication 9, les ailettes de rotor (101) étant formées d'un matériau élastique.

11. Centrale houlomotrice selon la revendication 9, les ailettes de rotor (101) étant formées d'un matériau rigide et rotatives à la périphérie de l'arbre (102) autour d'un palier de pivotement (126').
